# EUROPÄISCHE PATENTSCHRIFT

(11) **EP 2 446 445 B1**
(45) Veröffentlichungstag und Bekanntmachung des Hinweises auf die Patenterteilung: **05.06.2013**
(21) Anmeldenummer: 11705475.9
(22) Anmeldetag: 01.02.2011
(51) Int. Cl.: G21C 19/02, G21C 13/036, G21C 17/01, G21C 19/20

(54) **EINRICHTUNG UND VERFAHREN ZUM ENTFERNEN VON FREMDKÖRPERN VOM BODEN EINES REAKTORDRUCKBEHÄLTERS**
DEVICE AND METHOD FOR REMOVING FOREIGN BODIES FROM THE BOTTOM OF A REACTOR PRESSURE VESSEL
DISPOSITIF ET PROCÉDÉ POUR ÉLIMINER DES CORPS ÉTRANGERS DU FOND D'UNE CUVE DE RÉACTEUR

(30) Priorität: 26.02.2010 DE 102010002436
(43) Veröffentlichungstag der Anmeldung: 02.05.2012
(73) Patentinhaber: AREVA GmbH, 91052 Erlangen (DE)
(72) Erfinder: MÜLLER, Erhard, 91362 Pretzfeld (DE); TEWS, Christian, 90408 Nürnberg (DE)
(74) Vertreter: Meissner, Bolte & Partner
(86) Internationale Anmeldenummer: PCT/EP2011/051345
(87) Internationale Veröffentlichungsnummer: WO 2011/104067

(56) Entgegenhaltungen:
- US-A- 5 749 384
- US-A- 5 838 752
- US-A1- 2007 140 403

## Beschreibung

Ein nuklearer Reaktordruckbehälter ist ab der ersten Inbetriebnahme - auch während der Durchführung von Revisionsarbeiten etc. - mit Wasser geflutet. Es kann vorkommen, dass Fremdkörper, z.B. durch Wartungsarbeiten verursachte Metallspäne oder aus der Anlage gelöste Klein- oder Kleinstteile, wie Schrauben, Muttern, Blechteile in den Reaktordruckbehälter gelangen. Die Fremdkörper setzen sich z.B. auf dem Boden des Reaktordruckbehälters ab bzw. sammeln sich dort oder in der Nähe des Bodens, z.B. auf aus dem Boden ragenden Störstrukturen. Diese Fremdkörper sollten - z.B. im Rahmen einer Revision - aus dem Reaktordruckbehälter entfernt werden.

Bekannt ist die manuelle Bergung von Objekten aus einem Reaktordruckbehälter, z.B. mit Hilfe eines mit einem Greifer bestückten Manipulators. Da es sich in der Regel, z.B. im Fall von Metallspänen, um eine sehr große Anzahl von Fremdkörpern handelt, ist die bekannte manuelle Bergung der einzelnen Fremdkörper nicht praktikabel.

Die möglichst rückstandslose Entfernung der Kleinstpartikel bzw. Fremdkörper vom in der Regel kalottenförmig konkaven Boden des Reaktordruckbehälters wird durch Störstrukturen erschwert. Zu nennen sind hierbei z.B. die aus dem Boden ragenden Steuerstabantriebsgehäusestutzen und Messbereichslanzenstutzen. Derartige Störstrukturen sollen im folgenden der Einfachheit halber sämtlich als "Anschlussstutzen" bezeichnet werden. Der Zugang zum Boden des Reaktors ist in ca. 40m Wassertiefe zudem durch die darüberliegenden Kerneinbauten, z.B. oberes und unteres Kerngitter, erschwert.

Derartige Einrichtungen, die auf den Anschlussstutzen absetzbar sind und Ansaugöffnungen, Saugrohre, Pumpen und Filter umfassen, sind z.B. aus den Patentschriften US 5 838 752 A und US 5 749 384 A bekannt.

Aufgabe der Erfindung ist es, eine Einrichtung und ein Verfahren anzugeben, die zum Entfernen von Fremdkörpern der oben genannten Art vom Boden eines nuklearen, mit Wasser gefluteten Reaktordruckbehälters dienen, wobei der Boden in das Innere des Reaktordruckbehälters ragende Anschlussstutzen umfasst.

Hinsichtlich der Einrichtung wird die Aufgabe gelöst durch eine Einrichtung gemäß Patentanspruch 1, hinsichtlich des Verfahrens durch ein Verfahren gemäß Patentanspruch 8.

Die Erfindung beruht auf der Idee, ein eigenständiges Sauggerät vor Ort zu bringen, d.h. in die unmittelbare Nähe des Bodens abzusenken. Eigenständig heißt, das Sauggerät saugt Wasser aus der unmittelbaren Nähe des Bodens zusammen mit den Fremdkörpern auf, filtert die Fremdkörper in ihrem Inneren aus dem Wasser und gibt das Wasser direkt vor Ort wieder frei. Nach Beendigung des Saugvorgangs wird das Sauggerät zusammen mit den gesammelten Fremdkörpern geborgen und aus dem Reaktordruckbehälter entfernt.

Erfindungsgemäß ist die Einrichtung auf einem der Anschlussstutzen absetzbar und enthält eine Saugeinrichtung. Die Saugeinrichtung weist ein Saugrohr mit einer relativ zum Grundträger bewegbaren Ansaugöffnung auf, wobei die Ansaugöffnung bzw. das Saugrohr zum Aufsaugen der Fremdkörper vom Boden und/oder den Anschlussstutzen dient. Die Saugeinrichtung weist außerdem ein Filter zum Sammeln der Fremdkörper, einen Auslass und eine Wasser von der Ansaugöffnung über das Saugrohr und den Filter zum Auslass fördernde Saugpumpe auf.

Mit der Einrichtung gelingt das erfindungsgemäße Verfahren, nämlich die Einrichtung auf einem der Anschlussstutzen am Boden des Reaktordruckbehälters abzusetzen und im Betrieb mit der Saugpumpe Wasser von der Ansaugöffnung über das Saugrohr und über den Filter zum Auslass zu fördern. Hierbei wird die Ansaugöffnung zum Aufsaugen der Fremdkörper relativ zur restlichen Einrichtung über den Boden bzw. die Anschlussstutzen bewegt und die mit dem Wasser aufgesaugten Fremdkörper werden im Filter gesammelt. Das gefilterte Wasser gibt die Einrichtung vor Ort, d.h. im Bereich des Bodens durch den Auslass wieder frei.

Die Einrichtung ist in vorteilhafter Weise so konstruiert, dass sie anstelle des Elements, das normalerweise auf dem Anschlussstutzen ruht, zum Anschlussstutzen gebracht werden kann. Insbesondere hält die Einrichtung also z.B. deren maximale Abmessungen dahingehend ein, dass sie durch etwaige Kerneinbauten bewegt werden kann, um vor Ort zu gelangen. In der Regel ist die Einrichtung daher länglich, z.B. in etwa stabartig oder zylinderförmig längserstreckt ausgestaltet.

Erfindungsgemäß wird also - am Beispiel eines Siedewasserreaktors - mindestens ein Steuerstabführungsrohr und die dazu gehörigen vier Brennelement entladen, um den zugehörigen Anschlussstutzen freizugeben. Die Einrichtung, mit anderen Worten ein Sauger, wird dann auf dem Steuerstabantriebsgehäuserohr (AGR-Rohr) als Anschlussstutzen abgesetzt. Dies erfolgt z.B. dadurch, dass die Einrichtung mit Hilfe einer Lademaschine bzw. eines Manipulators positioniert wird. Hierzu dienen in der Regel Kameras und Lampen als Hilfsmittel, die z.B. auch an der Einrichtung vorgesehen sein können. Durch die in der platzierten Einrichtung enthaltene Saugeinrichtung ist dann ein direktes Absaugen der konkaven Kalottenoberfläche, also des Bodens in der Umgebung des AGR-Rohrstutzens möglich, welche lediglich durch die relative Beweglichkeit der Ansaugöffnung bzw. des Saugrohres begrenzt ist. Die Relativbewegung der Ansaugöffnung wird hier ebenfalls in der Regel kameraüberwacht durchgeführt. Die Fremdkörper werden im Filter, z.B. einem Siebfilter, gesammelt. Hier kann zusätzlich auch ein µ-Filter verwendet werden, welcher gleichzeitig eine weit über die Abscheidung der Fremdkörper hinaus reichende Filterung des angesaugten Wassers erlaubt. Der gefilterte Massenstrom, d.h. das durch den Auslass ausgestoßene Wasser wird direkt in den Reaktordruckbehälter zurück gegeben.

Nach Beendigung des Saugvorganges wird die Einrichtung vom Anschlussstutzen wieder entfernt und zusammen mit den gesammelten Fremdkörpern geborgen.

Durch die Erfindung kann also beispielsweise der Boden an jeder Steuerstabführungsrohrposition in stark strahlender Umgebung mit Hilfe der Einrichtung bedient, also gesäubert werden. Ein gezieltes Absaugen von Fremdkörpern wird ermöglicht.

In einer vorteilhaften Ausführungsform der Einrichtung ist eine Längsachse der Einrichtung definiert, welche - wenn diese auf dem Anschlussstutzen abgesetzt ist - durch den Anschlussstutzen verläuft und so z.B. mit dessen eigener Mittellängsachse zusammenfällt. Die Ansaugöffnung ist dann bezüglich dieser Längsachse in Umfangsrichtung, Radialrichtung und Längsrichtung bewegbar.

Das untere Ende der Einrichtung liegt in der Regel wegen des Absetzens auf dem Anschlussstutzen im Bereich dessen oberen Endes. Insbesondere ist die Bewegung der Ansaugöffnung in Längsrichtung über das untere Ende der Einrichtung hinaus wichtig, um die verschieden hohen Abstände zwischen der Oberkante der Anschlussstutzen, auf welchen die Einrichtung aufsitzt und dem Boden, auf welchem der Saugvorgang stattfinden soll, auszugleichen. Durch die Bewegbarkeit sowohl in Umfangsrichtung als auch in Radialrichtung kann eine breite Umgebung, z.B. etwa ein Kreisring, welcher den Anschlussstutzen umgibt, von der auf dem aktuellen Anschlussstutzen abgesetzten Einrichtung in einem Arbeitsgang erreicht werden.

Um die entsprechende Beweglichkeit der Ansaugöffnung zu erreichen, ist beispielsweise das Saugrohr oder dessen an die Ansaugöffnung anschließender Endbereich teleskopisch ausfahrbar, rotierbar oder schwenkbar. Die Ausfahrbarkeit des Saugrohres kann besonders einfach teleskopisch, z.B. parallel, schräg oder quer zur Längsachse realisiert werden.

Erfindungsgemäß enthält die Einrichtung eine auf dem Anschlussstutzen absetzbare Zentrierhaube und einen, um eine Drehachse der Einrichtung relativ zur Zentrierhaube rotierbare, die Saugeinrichtung aufweisenden Grundträger. Bei einer derartigen Einrichtung kann die Zentrierhaube fest, z.B. durch Reibschluss auf dem Anschlussstutzen abgesetzt werden, hierbei auch beispielsweise aus dem Stutzen ragenden Antriebselement umschließen und gleichzeitig eine sichere Abstützung gewährleisten. Die angesprochen Drehachse entspricht im abgesetzten Zustand in der Regel der oben genannten Längsachse. Durch die Drehbarkeit des Grundträgers zusammen mit der Saugeinrichtung relativ zur fixierten Zentrierhaube kann insbesondere bereits die oben genannte Relativbewegung des Saugrohres bzw. der Ansaugöffnung in Umfangsrichtung der Längsachse realisiert werden.

Mit anderen Worten dient damit im Betrieb der untere Teil der Einrichtung in Form der Zentrierhaube als fixierter Haltefuß, der obere Teil in Form der Grundträgers mit der Saugeinrichtung als eigentlicher, beweglicher Sauger.

Die Erfindung kann dahingehend weitergebildet werden, dass das Saugrohr außerhalb bzw. neben der Zentrierhaube verläuft. Die Zentrierhaube dient dann alleine der Abstützung auf dem Anschlussstutzen und kann besonders einfach und stabil ausgeführt werden, braucht insbesondere keinerlei Durchbrechungen oder Führungen für das Saugrohr zu enthalten, um dieses in Richtung zum Boden hin zu führen. Z.B. verläuft das Saugrohr parallel der Längserstreckungsrichtung der Zentrierhaube, d.h. in der Regel parallel zur oben genannten Drehsachse bzw. Längsachse.

In einer weiteren vorteilhaften Ausführungsform ist das Saugrohr in einem an die Ansaugöffnung anschließenden Endbereich gebogen. Besitzt das Saugrohr also einen im Wesentlich gerade verlaufenden, sich im Betrieb in Richtung zum Boden hin erstreckenden Teil und ein daran angebrachtes gebogenes Ende, so kann durch alleinige Rotation des Saugrohres um die Mittellängsachse des gerade verlaufenden Teils zusammen mit einer Rotation des geraden Saugrohres um den Anschlussstutzen ein Kreisringbereich des Bodens von der Ansaugöffnung überstrichen werden. Insbesondere kann der gebogene Endbereich über einen die Einrichtung bei eingeschwenktem Endbereich umschreibenden Umkreis hinaus verfahren werden. So kann zum einen im Betrieb durch Ausschwenken des Endbereiches möglichst große Radialumgebung der Einrichtung abgesaugt werden. Andererseits kann der Endbereich zur Einrichtung hin radial eingeschwenkt werden, um beispielsweise die gesamte Einrichtung von der Wasseroberfläche her durch eine Öffnung des oberen und unteren Kerngitters zum Boden des Reaktordruckbehälters zu bewegen.

In einer weiteren bevorzugten Ausführungsform ist der sich an die Ansaugöffnung anschließende bzw. diese aufweisende Endbereich des Saugrohres auswechselbar. So können für verschiedene bzw. spezielle Saugaufgaben verschieden geformte, z.B. gerade, gebogene oder anderweitig für spezielle Zwecke geformte Endbereiche an die Einrichtung angekoppelt werden.

In einer bevorzugten Ausführungsform der Erfindung enthält der Filter einen Filtereinsatz, der zusammen mit im Filter gesammelten Fremdkörpern aus der Einrichtung auswerfbar ist. Bei im Filter aufgesammelten Hotspots, d.h. stark strahlenden Teilchen ist somit der Filter zusammen mit seinem radioaktiven Inhalt unter Wasser abwerfbar und z.B. in einem im Brennelementlagerbecken aufgestellten Köcher auffangbar. Die Einrichtung selbst wird dadurch nicht radioaktiv verseucht und kann auch nach Arbeit im radioaktiven Bereich bzw. nach Kontakt mit radioaktivem Material weiter verwendet werden. Diese Ausführungsform ermöglicht also ein sicheres Abführen des Filters und gegebenenfalls seines strahlenden Inhalts.

In einer bevorzugten Weiterbildung der Einrichtung in Verbindung mit der oben genannten Zentrierhaube ist der Filtereinsatz durch das Innere der Zentrierhaube, z.B. in Richtung der Drehsachse, auswerfbar. Die Zentrierhaube ist in der Regel ohnehin hohl bzw. hohlzylindrisch ausgeführt, um entsprechend aus den Anschlussstutzen nach oben hin vorstehende Teile zu umgreifen und sich überhaupt auf dem Anschlussstutzen abstützen zu können. Der Auswurf des Filters ist dann besonders einfach zu bewerkstelligen und erfolgt in der Betriebslage der Einrichtung - die Zentrierhaube zeigt senkrecht nach unten - in Richtung der Schwerkraft ohne zusätzliche Hilfsmittel.

Durch geeignete Ausgestaltung des Saugrohres, z.B. durch den o.g. gebogenen Endbereich, kann ein weiter Umgebungsbereich des Anschlussstutzens abgesaugt werden, ohne die Einrichtung umzusetzen. Dieser Bereich ist in einer vorteilhaften Ausgestaltung so gewählt, d.h. die Einrichtung so bemessen, dass bei bekanntem Abstand des besetzten Anschlussstutzens zu benachbarten Anschlussstutzen der Saugbereich wenigstens bis zur Mitte benachbarter Anschlussstutzen bzw. deren Verbindungslinie reicht. So kann der gesamte, bis zu den benachbarten Anschlussstutzen reichende Bereich bzw. Umkreis des besetzten Anschlussstutzens abgesaugt werden. Da die anderen Hälfte des benachbarten Anschlussstutzens vom übernächsten Anschlussstutzen aus wieder erreichbar ist (gleiche Abständen vorausgesetzt), kann in einer derartigen Verfahrensvariante die Einrichtung nur auf jedem zweiten Anschlussstutzen abgesetzt werden, und dennoch der gesamte Boden des Reaktordruckbehälters zusammen mit den Anschlussstutzen vollständig abgesaugt werden.

Für eine Absaugung des Anschlussstutzens selbst, auf welchem die Einrichtung abgesetzt wird, ist es möglich, die Einrichtung ausnahmsweise ein Stück anzuheben und dann das Saugrohr bzw. die Ansaugöffnung radial nach innen zu schwenken.

Für eine weitere Beschreibung der Erfindung wird auf die Ausführungsbeispiele der Zeichnungen verwiesen. Es zeigen, jeweils in einer schematischen Prinzipskizze:
- Fig.1: einen den Boden enthaltenden Ausschnitt eines Reaktordruckbehälters,
- Fig.2: eine erfindungsgemäße Einrichtung auf einem Anschlussstutzen im Betrieb,
- Fig.3: eine erfindungsgemäße Einrichtung auf einem Anschlussstutzen.
- Fig.4: verschiedene abnehmbare Endbereiche von Ansaugrohren,
- Fig.5: eine Draufsicht auf den Boden des Reaktordruckbehälters aus Fig.1,
- Fig.6: einen alternativen Ausschnitt der Einrichtung aus Fig. 3,
- Fig.7: die Einrichtung aus Fig. 3 und 6 in der Draufsicht.

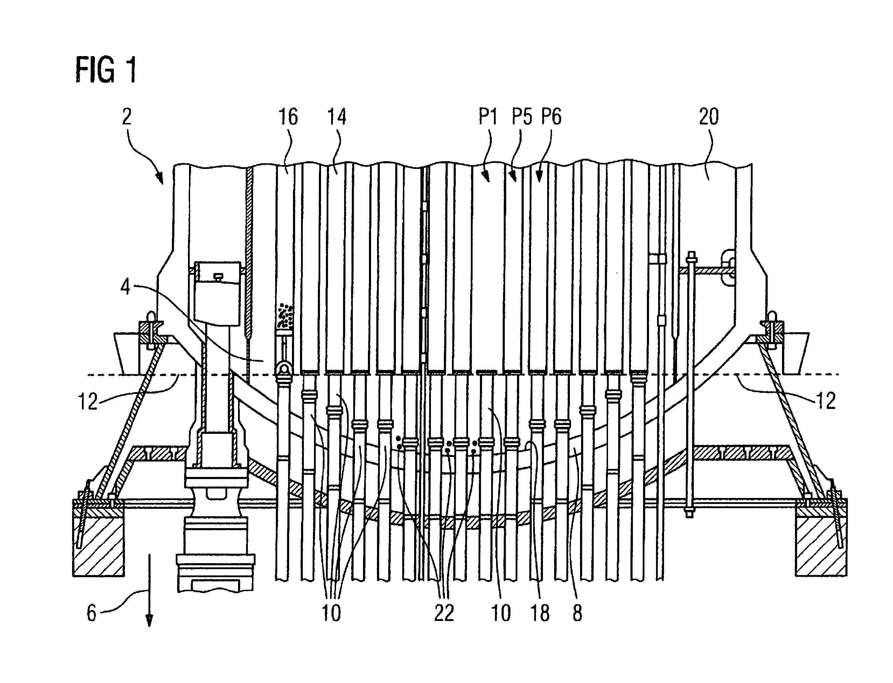

Fig. 1 zeigt einen Ausschnitt aus einem Reaktordruckbehälter 2, im Beispiel einen Siedewasserreaktor, der während einer Revision mit Wasser 4 geflutet ist. Gezeigt ist insbesondere dessen in Schwerkraftrichtung 6 liegender unterer Boden 8. Vom Boden 8 stehen nach oben, also entgegen der Schwerkraftrichtung 6, Anschlussstutzen 10 ab, welche allesamt auf einer Ebene 12 enden. Die Anschlussstutzen 10 sind im Beispiel Steuerstabantriebsgehäuserohre (AGR-Rohre). Auf jedem Anschlussstutzen 10 ist ein Steuerelementführungsrohr 14 angebracht, welches jeweils ein Steuerelement 16 enthält (in Fig. 1 ist nur eines dargestellt, die restlichen Steuerelemente 16 sind entgegen der Schwerkraftrichtung 6 nach oben hin in den nicht dargestellten Kernmantel gefahren).

Auf der Innenseite 18 des Bodens 8, welche zum Inneren 20 des Reaktordruckbehälters 2 hin weist, befinden sich Fremdkörper 22 (in Fig. 1 stark vergrößert dargestellt), welche während der Revision zu entfernen sind. Hierzu werden zunächst nicht dargestellte weiter oben im Reaktor liegende Kerneinbauten, z.B. Dampfabscheider, Dampftrockner und Kerndeckel ausgebaut. Anschließend wird eines der Steuerelemente 16, im Beispiel dieses der Position P1, zusammen mit seinem Steuerelementführungsrohr 14 und den zugehörigen, darüber liegenden nicht dargestellten Brennelementen entfernt. An der entsprechenden Position P1 verbleibt lediglich der betreffende Anschlussstutzen 10.

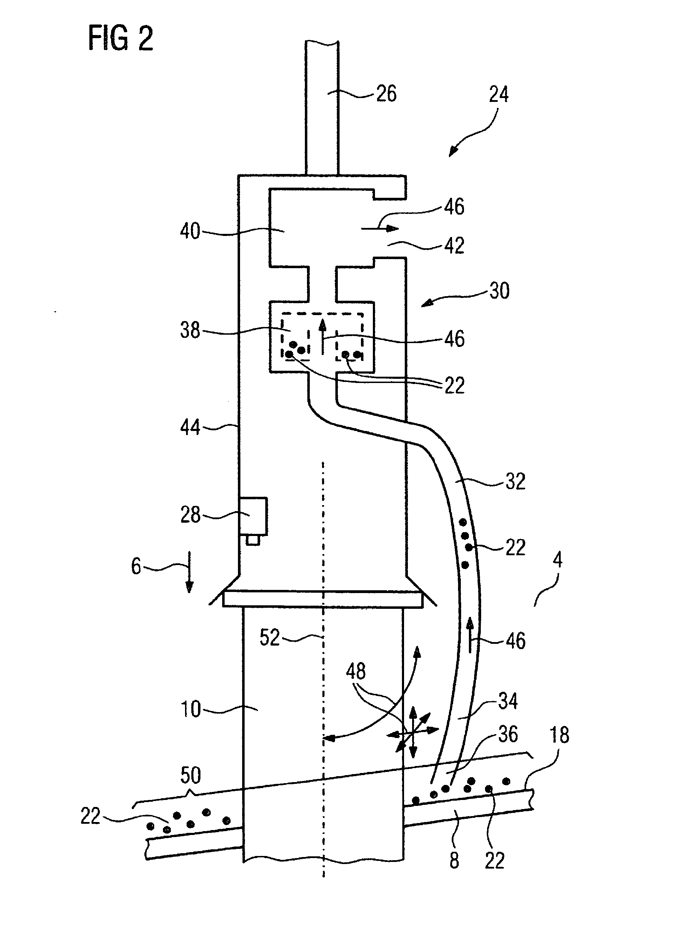

Dieser ist in Fig. 2, zusammen mit einem Ausschnitt des Bodens 8, bzw. dessen Innenseite 18 vergrößert dargestellt. Die Entfernung der Fremdkörper 22 erfolgt durch erfindungsgemäßes Absaugen mit Hilfe einer erfindungsgemäßen Einrichtung 24. Diese wird mit Hilfe eines nicht näher erläuterten Manipulators 26 des Kernkraftwerkes in Schwerkraftrichtung 6 zum betreffenden Anschlussstutzen 10 abgelassen und auf diesem abgesetzt und somit - z.B. unter Reibschluß durch sein Eigengewicht oder durch Andruck mit dem Manipulator - dort fixiert. Dieser Prozess erfolgt z.B. unter Zuhilfenahme einer in der Einrichtung 24 angeordneten Zentrierkamera 28.

Die Einrichtung 24 enthält eine Saugeinrichtung 30. Diese umfasst ein Saugrohr 32, dessen eines Ende einen Saugende 34 mit einer endseitigen Ansaugöffnung 36 bildet. Am anderen Ende ist das Saugrohr 32 an einen Filter 38 angeschlossen, der andererseits wieder zu seiner Saugpumpe 40 führt. Die Saugpumpe 40 ist wiederrum zu einem Auslass 42 geführt. Das Saugrohr 32 bzw. zumindest dessen Saugende 34 ist relativ zum Rest der Einrichtung 24, insbesondere zu deren Gehäuse 44, welches auf dem Anschlussstutzen 10 fest aufsitzt, bewegbar.

Im Betrieb fördert die Saugpumpe 40 Wasser 4 in Richtung der Pfeile 46 durch die Ansaugöffnung 36 und das Saugrohr 32 über den Filter 38 bis zum Auslass 42. Zusammen mit dem Wasser 4 werden hierbei Fremdkörper 22 eingesaugt und im Filter 38 aufgefangen bzw. zurückgehalten, so dass nur Wasser 4 ohne Fremdkörper 22 aus dem Auslass 42 strömt. Durch eine Relativbewegung des Saugendes 34 bzw. der Ansaugöffnung 36 zur restlichen Einrichtung 24 in Richtung der Pfeile 48 kann die Umgebung 50 des Anschlussstutzens 10 bearbeitet, d.h. dort sämtliche Fremdkörper 22 abgesaugt und im Filter 38 gesammelt werden. Insbesondere definiert der Anschlussstutzen 10 eine Mittellängsachse 52, wobei das Saugende 34 bzw. die Ansaugöffnung 36 bezüglich dieser Mittellängsachse 52 in Radial-, Axial- und Umfangsrichtung bewegbar sind.

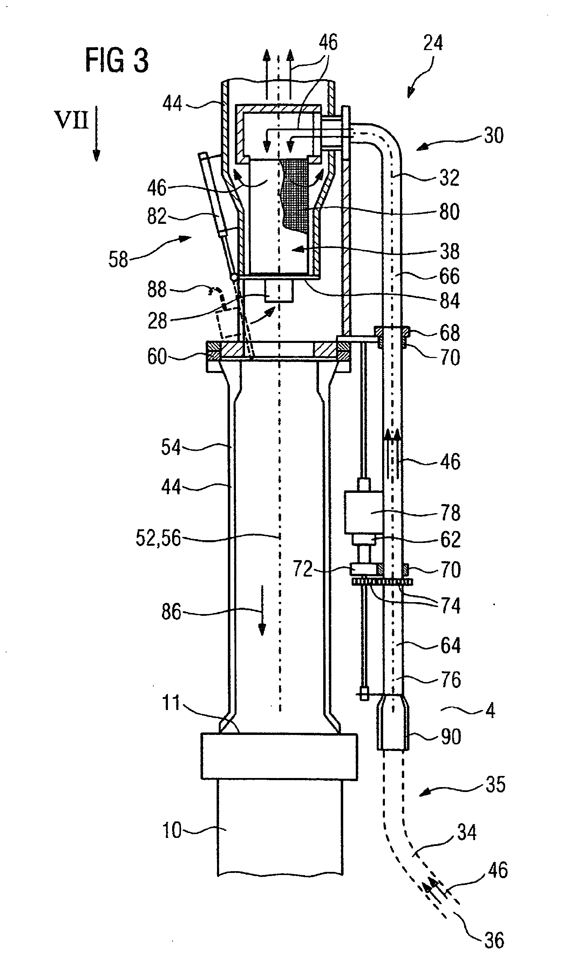

Fig. 3 zeigt einen Ausschnitt der erfindungsgemäßen Einrichtung 24, bei der das Gehäuse 44 mehrteilig ausgeführt ist. Hier ist das in der gezeigten Betriebsposition dem Anschlussstutzen 10 zugewandte Ende der Einrichtung 24 eine Zentrierhaube 54. Diese ist um eine Drehsachse 56, die im Wesentlichen mittig in der größtenteils zylinderförmig ausgestalteten Einrichtung 24 verläuft, rotierbar an einem Grundträger 58 gelagert. Ausschließlich der Grundträger 58 beinhaltet die Saugeinrichtung 30. Die Rotierbarkeit ist insbesondere durch ein Axialkugellager 60 bewerkstelligt. Hierdurch kann die Zentrierhaube 54 fest, z.B. durch Reibschluss auf den Anschlussstutzen 10 aufgesetzt werden und der Grundträger 58 um die Drehachse 56, welche nun mit der Mittellängsachse 52 zusammen fällt, rotiert werden. So ist insbesondere das exzentrisch angeordnete, d.h. neben der Zentrierhaube 54 verlaufende Saugrohr 32 in Umfangsrichtung um die Mittellängsachse 52 bewegbar. Fig. 3 zeigt zusätzlich, wie die Verfahrbarkeit der Ansaugöffnung 36 in Axialrichtung der Mittellängsachse 52 bewerkstellig ist: Das Saugrohr 32 ist im wesentlichen geteilt in einen am Grundträger fest installierten Rohrabschnitt 66 und ein teleskopisch zu diesem bewegbares Teleskoprohr 64. Ein Pneumatikzylinder 62 erlaubt die Bewegung des Teleskoprohres 64 in Axialrichtung (Mittellängsachse 76) des fest stehenden Rohabschnittes 66. Hierzu ist das Teleskoprohr 64 in einem Axiallager 68 bzw. Gleitlagerbuchsen 70 geführt. Durch eine pneumatische Dreh- und Schwenkeinheit 72 bzw. Zahnräder 74 ist außerdem das Teleskoprohr 64 gegenüber dem Rohrabschnitt 66 um die Mittellängsachse 76 rotierbar. Da das Saugende 34 des Saugrohres 32 im Endbereich 35 des Saugrohres 32 außerdem gebogen ist, wird durch eine Rotation des Teleskoprohres 64, an welchem der Endbereich 35 drehfest angebracht ist, eine gemischte Radial- und Umfangsbewegung der Ansaugöffnung 36 bezüglich der Mittellängsachse 52 möglich. Der gesamte von der Ansaugöffnung 36 durch deren Bewegung absaugbare Bereich ist mit Hilfe einer am Saugrohr 32 befestigen Videoeinheit 78, z.B. bestehend aus einer Kamera und einer Lampe, einsehbar. So kann der Saugvorgang stets beobachtet und ferngesteuert werden.

In der Ausführungsform nach Fig. 3 ist außerdem der Filter 38 so ausgebildet, dass dieser einen die Fremdkörper 22 auffangenden Filtereinsatz 80 aufweist. Ein solcher Einsatz besteht z.B. aus Edelstahl und weist eine Maschenweite von 0,2mm auf. Der Filtereinsatz 80 ist im Filter 38 mit Hilfe einer über einen Pneumatikzylinder 82 betätigbaren Schwenkklappe 84 gehalten. An der Schwenkklappe 84 ist außerdem die Zentrierkamera 28 angebracht, welche durch die Zentrierhaube 54 in Richtung des Anschlussstutzens 10 blickt. Die Schwenkklappe 84 ist in Fig. 3 zusätzlich in geöffneter Stellung gezeigt, wodurch der Filtereinsatz 80 in Richtung des Pfeils 86 durch die Zentrierhaube 54 auswerfbar ist. Da der Filtereinsatz 80 evtl. hochradioaktives Material in Form der Fremdkörper 22 enthält, welches nur unter Wasser weiterverarbeitet bzw. -transportiert werden darf, ist für den Fall des Versagens des Pneumatikzylinders 82 an der Schwenkklappe 84 außerdem eine Notentriegelung 88 in Form eines Entriegelungshebels zum Zwangsöffnen der Schwenkklappe 84 vorgesehen.

Die Pfeile 46 zeigen wieder den Verlauf der Strömung von Wasser 4 durch den dargestellten Teil der Saugeinrichtung 30. In der in Fig. 3 gezeigten Ausführungsform ist außerdem der Endbereich 35 des Saugrohres 32 am Teleskoprohr 64 mit Hilfe eines Bajonettverschlusses 90 auswechselbar befestigt.

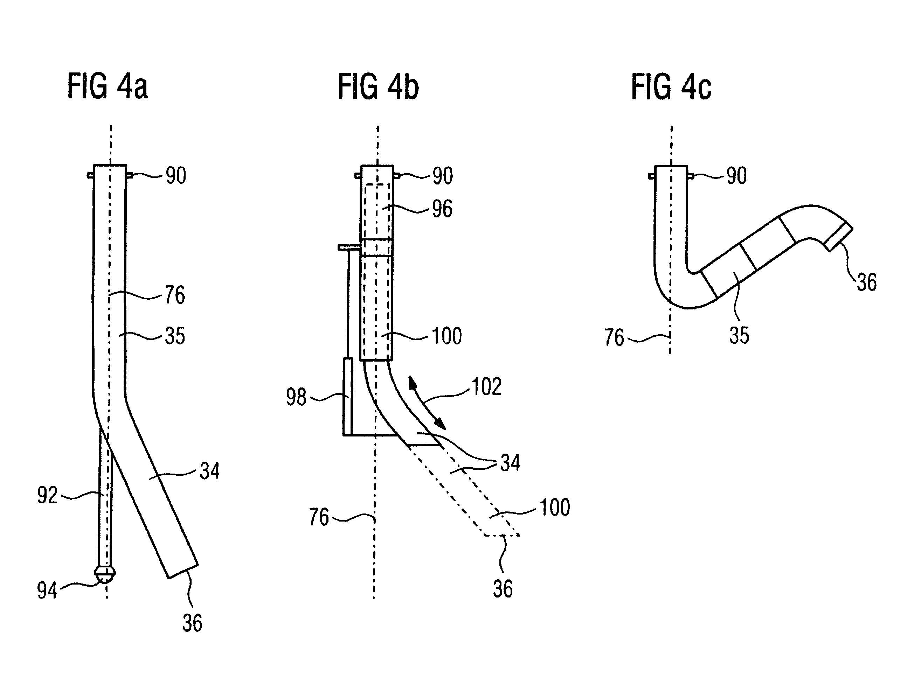

Fig. 4a-c zeigen daher drei verschiedene Ausführungsformen für Endbereiche 35 mit jeweiligen Bajonettverschlüssen 90, die für verschiedene Saugaufgaben am restlichen Saugrohr 32 bzw. Teleskoprohr 64 angebracht werden können. Fig. 4a und c zeigen starre Ausführungen von Endbereichen 35. Gemäß Fig. 4a ist das Saugende 34 gebogen ausgeführt. In Verbindung mit oben beschriebener Rotation des Saugendes 34 um die Mittellängsachse 76 kann hier am Boden 8 wieder ein Radialring um den Anschlussstutzen 10 abgesaugt werden. Der Endbereich 35 gemäß Fig. 4a besitzt eine Abstützhilfe 92, an deren Ende sich eine gesicherte, rotierbare Kugel 94 befindet, welche auf dem Boden 8 des Reaktordruckbehälters 2 absetzbar ist.

Fig. 4b zeigt eine alternative Ausführungsform eines Endbereiches 35. Dieser ist an sich nochmals teleskopisch ausgestaltet. In einem Hüllrohr 96 ist durch einen Pneumatikzylinder 98 ein Edelstahlschlauch, z.B. ein Wellmantelschlauch 100 in Richtung des Doppelpfeils 102 verschiebbar gelagert. Durch eine entsprechende Verstellung kann ein entsprechend durch Ausfahren des Wellmantelschlauches erweiterbarer Radialbereich um den Anschlussstutzen 10 durch die Ansaugöffnung bedient werden. Fig. 4b zeigt den Wellmantelschlauch 100 einmal in der eingefahrenen und gestrichelt in der maximal ausgefahrenen Position.

Fig. 4c zeigt eine weitere Variante eines Endbereiches 35, welcher besonders stark gekrümmt ist, um z.B. bei der Situation gemäß Fig. 3 nach Anheben der Einrichtung 24 um eine kleines Stück den Endbereich 35 nach innen, d.h. zum Anschlussstutzen 10 hin, zu schwenken und so diesen selbst an seiner Oberseite 11 abzusaugen.

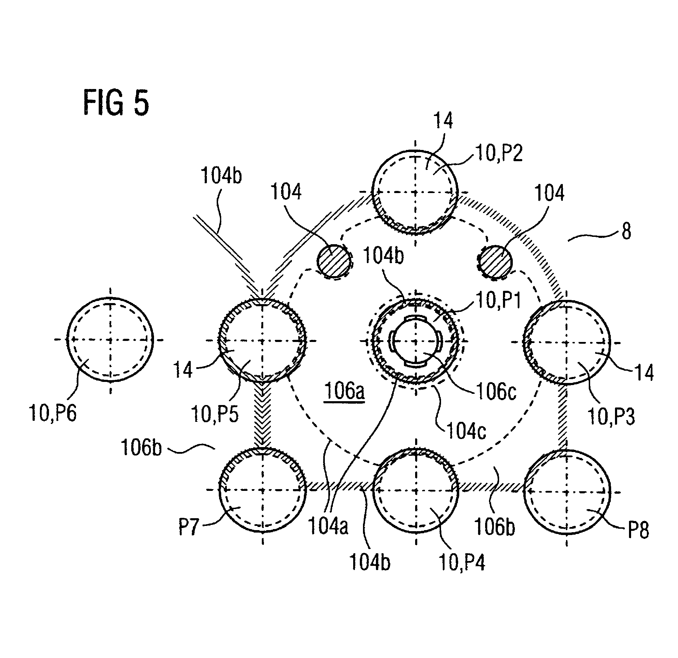

Fig. 5 zeigt in der Draufsicht den Anschlussstutzen 10 der Position P1 aus Fig. 1, auf welchem die Einrichtung 24 abgesetzt ist. Gezeigt sind außerdem vier diesem kreuzweise benachbarte Anschlussstutzen 10 der Positionen P2-P5 und zwei sonstige, sich am Boden befindende, in Fig. 1 nicht gezeigte Störstrukturen 104, z.B. in Form von durch den Boden 8 geführten Kernflussmessgehäuserohren. Fig. 5 zeigt außerdem noch den übernächsten Nachbarn der Position P1 in Form des Anschlussstutzens 10 der Position P6. Die Anschlussstutzen der Positionen P1, P5 und P6 liegen also in einer Reihe.

Fig. 5 zeigt mit gestrichelter Umrandung 104a einen Bereich 106a des Bodens 8, welcher mit Hilfe des in Fig. 4a gezeigten Endbereiches 35 bei einer auf Position P1 platzierten Einrichtung 24 absaugbar ist. Durch einen Wechsel des Endbereiches 35 gegen denjenigen von Fig. 4b ist aufgrund der Teleskopierbarkeit ein größerer, schraffiert durch die Grenze 104b berandeter Bereich 106b erreichbar bzw. absaugbar. Schließlich ist durch einen Wechsel zu dem in Fig. 4c gezeigten Endbereich 35 noch der durch die strichpunktierte Grenze 104c berandete Bereich, nämlich die Oberseite 11 des Anschlussstutzens 10 auf Position P1 selbst absaugbar, wenn die Einrichtung 24 an Position P1 leicht angehoben ist.

In Fig. 5 ist erkennbar, dass die jeweiligen, von der Position P1 aus absaugbaren Bereiche 106a,b jeweils mindestens bis zur Mitte der jeweiligen benachbarten Anschlussstutzen 10 der Positionen P2-P5 bzw. deren Verbindungslinien reichen. Dies hat zur Folge, dass in einem nächsten Verfahrensschritt nach Entfernen der Einrichtung 24 von Position P1 diese erst wieder auf einen übernächsten Anschlussstutzen 10 der Position P6 abgesetzt werden muss. Von dort ist wieder mit dem Endbereich 35 aus Fig. 4b der durch die Linie 10b berandete Bereich 10b absaugbar, der lückenlos an den o.g. Bereich 106b anschließt. Durch entsprechendes Versetzen der Einrichtung 24 kann so schließlich der gesamte Boden 8 lückenlos abgesaugt werden. Hierzu ist z.B. in der benachbarten Reihe dann die Einrichtung 24 auf die Positionen P7 und P8 abzusetzen. Da bei diesem beispielhaften Vorgehen die Einrichtung 24 z.B. niemals an den Positionen P5 und P3 abzusetzen ist, werden auch die dortigen Steuerelementführungsrohre 14 nie entfernt. So muss auch die Oberseite der darunterliegenden Anschlussstutzen 10 nicht abgesaugt werden, da dort kein Fremdkörper 22 hingelangen kann.

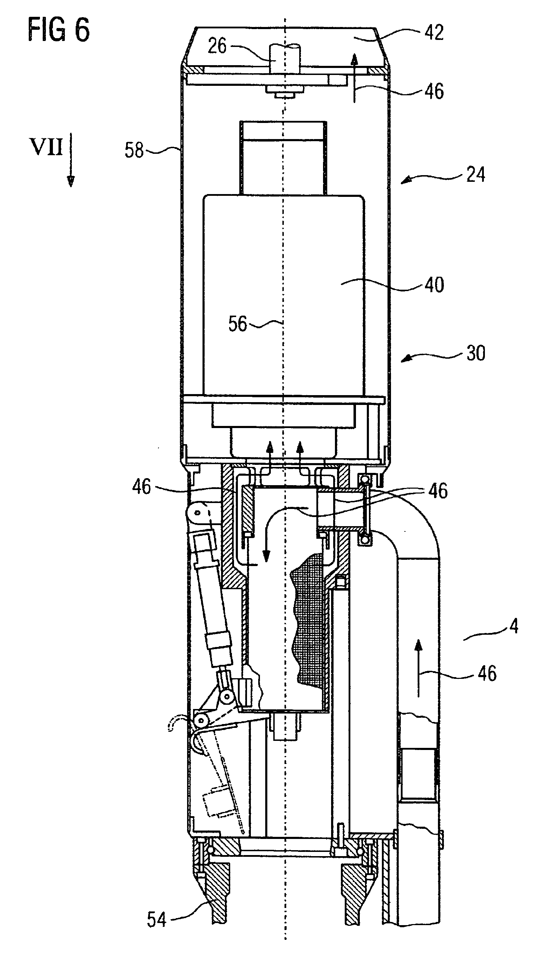

Fig. 6 zeigt als Ergänzung zu Fig. 3 das obere Ende der dort gezeigten Einrichtung 24 mit der Saugpumpe 40, wobei hier durch die Pfeile 46 nochmals der Flussweg des Wassers 4 durch die Saugeinrichtung 30 verdeutlicht ist. Insbesondere ist der Auslass 42 und das Ende des Manipulators 26 erkennbar, an welchem drehfest der Grundträger 58 befestigt ist. Durch Eingriff des Manipulators wird so z.B. der Grundträger 58 um die Drehachse 56 zur Zentrierhaube 54 rotiert.

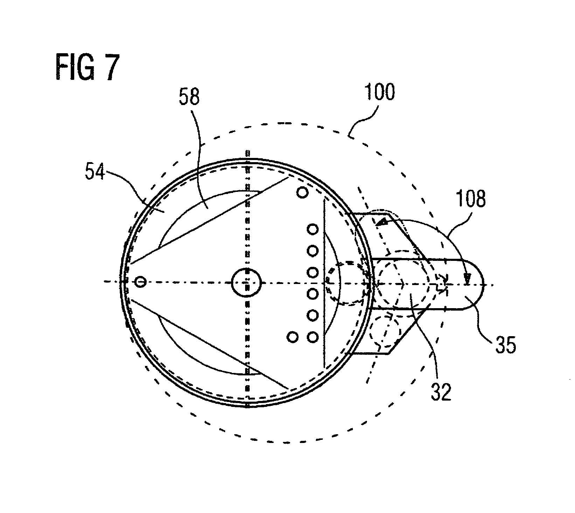

Fig. 7 zeigt die Einrichtung 24 aus Fig. 3 und 6 in Blickrichtung des Pfeils VII, d.h. in Draufsicht. Insbesondere ist die zylindrische Form des Grundkörpers 58 und der Zentrierhaube 54 zu erkennen, sowie das seitlich außen an der Einrichtung 24 verlaufende Saugrohr 32 mit dem radial senkrecht ausgestellten Endbereich 35. Zu erkennen ist, wie in Richtung des Pfeils 108 der Endbereich 35 - im Beispiel um 115° - einschwenkbar ist, bis er im vollständig eingezogenen Zustand des Teleskoprohres 64 an der Zentrierhaube 54 anliegt (ebenfalls dargestellt). Hierdurch ist erreicht, dass in dieser Position die gesamte Einrichtung 24 einen Umkreis 110 mit Durchmesser von z.B. 270mm aufweist. Nur so ist die gesamte Einrichtung durch ein nicht dargestelltes oberes und unteres Kerngitter mit einer Durchgangsbohrung von je 275mm durchführbar. Erst nach Durchtritt durch die Kerngitter, also z.B. in der in Fig. 3 und 6 gezeigten abgesetzten Position wird der Endbereich ausgeschwenkt.

## Patentansprüche

1. Einrichtung (24) zum Entfernen von Fremdkörpern (22) vom Boden (8) eines nuklearen, mit Wasser (4) gefluteten Reaktordruckbehälters (2), wobei der Boden (8) in das Innere (20) des Reaktordruckbehälters (8) ragende Anschlussstutzen (10) umfasst, wobei die Einrichtung (24) auf einem der Anschlussstutzen (10) absetzbar ist und eine Saugeinrichtung (30) enthält, die ein Saugrohr (32) mit einer relativ zur restlichen Einrichtung (24) bewegbaren Ansaugöffnung (36) zum Aufsaugen der Fremdkörper (22) vom Boden (8) und/oder dem Anschlussstutzen (10), einen Filter (38) zum Sammeln der Fremdkörper (22), einen Auslass (42) und eine im Betrieb Wasser (4) von der Ansaugöffnung (36) über das Saugrohr (32) und den Filter (38) zum Auslass (42) fördernde Saugpumpe (40) aufweist, mit einer auf dem Anschlussstutzen (10) absetzbaren Zentrierhaube (54), **gekennzeichnet durch** einen, , um eine Drehachse (56) der Einrichtung (24) relativ zur Zentrierhaube (54) rotierbaren, die Saugeinrichtung (32) aufweisenden Grundträger (58).

2. Einrichtung (24) nach Anspruch 1, bei der im abgesetzten Zustand die Ansaugöffnung (36) bezüglich einer durch den Anschlussstutzen (10) verlaufenden Längsachse (52) der Einrichtung (24) in Umfangsrichtung, Radialrichtung und Längsrichtung bewegbar ist.

3. Einrichtung (24) nach Anspruch 1 oder 2, bei der das Saugrohr (32) außerhalb der Zentrierhaube (54) verläuft.

4. Einrichtung (24) nach einem der vorhergehenden Ansprüche, bei der das Saugrohr (32) in einem an die Ansaugöffnung (36) anschließenden Endbereich (35) gebogen ist.

5. Einrichtung (24) nach einem der vorhergehenden Ansprüche, bei der der an die Ansaugöffnung (36) anschließende Endbereich (35) des Saugrohres (32) zusammen mit dieser auswechselbar ist.

6. Einrichtung (24) nach einem der vorhergehenden Ansprüche, bei der der Filter (38) einen Filtereinsatz (80) enthält, der zusammen mit im Filtereinsatz (80) gesammelten Fremdkörpern (22) aus der Einrichtung (24) auswerfbar ist.

7. Einrichtung (24) nach Anspruch 6, bei der der Filtereinsatz (80) durch das Innere der Zentrierhaube (54) auswerfbar ist.

8. Verfahren zum Entfernen von Fremdkörpern (22) vom Boden (8) eines nuklearen, mit Wasser (4) gefluteten Reaktordruckbehälters (2), wobei der Boden (8) in das Innere (20) des Reaktordruckbehälters (2) ragende Anschlussstutzen (10) umfasst, bei dem eine Einrichtung (24) nach einem der Ansprüche 1-7 auf einem der Anschlussstutzen (10) abgesetzt wird , wobei die Saugpumpe (40) Wasser (4) von der Ansaugöffnung (36) durch das Saugrohr (32) über den Filter (38) zum Auslass (42) fördert, die Ansaugöffnung (36) zum Aufsaugen der Fremdkörper (22) vom Boden (8) und/oder dem Anschlussstutzen (10) relativ zur restlichen Einrichtung (24) bewegt wird, und die Fremdkörper (22) im Filter (38) gesammelt werden.

9. Verfahren nach Anspruch 8, bei dem der Boden (8) und/oder die Anschlussstutzen (10) in einem diesen umgebenden Bereich (106a,b) des durch die Einrichtung (24) besetzten Anschlussstutzens (10), der wenigstens bis zur Mitte benachbarter Anschlussstutzen (10) reicht, abgesaugt werden.

## Claims

1. Device (24) for removing foreign bodies (22) from the floor (8) of a nuclear reactor pressure vessel (2) that is flooded with water (4), wherein the floor (8) comprises coupling connectors (10) projecting into the interior (20) of the reactor pressure vessel (2), wherein the device (24) can be placed on one of the coupling connectors (10) and contains a suction device (30), which has a suction tube (32) having an intake opening (36) that can be moved relative to the remaining device (24) for taking in the foreign bodies (22) from the floor (8) and/or from the coupling connectors (10), a filter (38) for collecting the foreign bodies (22), an outlet (42) and a suction pump (40) delivering water (4) from the intake opening (36) via the suction tube (32) and the filter (38) to the outlet (42), with a centring hood (54) that can be placed on the coupling connectors (10), **characterised by** a main carrier (58) that can be rotated around a rotational axis (56) of the device (24) relative to the centring hood (54) and that has the suction tube (32).

2. Device (24) according to claim 1, wherein, in a placed state, the intake opening (36) can be moved in the peripheral direction, radial direction and longitudinal direction with respect to a longitudinal axis (52) of the device (24) running through the coupling connector (10).

3. Device (24) according to claim 1 or 2, wherein the suction tube (32) runs outside the centring hood (54).

4. Device (24) according to one of the preceding claims, wherein the suction tube (32) is curved in an end region (35) that connects to the intake opening (36).

5. Device (24) according to one of the preceding claims, wherein the end region (35) of the suction tube (32) connecting to the intake opening (36) can be replaced together with this.

6. Device (24) according to one of the preceding claims, wherein the filter (38) contains a filter cartridge (80), which, together with foreign bodies (22) collected in the filter cartridge (80), can be expelled from the device (24).

7. Device (24) according to claim 6, wherein the filter cartridge (80) can be expelled through the interior of the centring hood (54).

8. Method for removing foreign bodies (22) from the floor (8) of a nuclear reactor pressure vessel (2) that is flooded with water (4), wherein the floor (8) comprises coupling connectors (10) projecting into the interior (20) of the reactor pressure vessel (2), wherein a device (24) according to one of claims 1 to 7 is placed on one of the coupling connectors (10), wherein the suction pump (40) delivers water (4) from the intake opening (36) through the suction tube (32) via the filter (38) to the outlet (42), the intake opening (36) for taking in the foreign bodies (22) from the floor (8) and/or the coupling connectors (10) is moved relative to the remaining device (24), and the foreign bodies (22) are collected in the filter (38).

9. Method according to claim 8, wherein the floor (8) and/or the coupling connectors (10) are extracted by suction in a region (106a, b) of the coupling connector (10) filled by the device (24) that encloses this, which is sufficient at least until the middle of adjacent coupling connectors (10).

## Revendications

1. Dispositif (24) pour éliminer des corps étrangers (22) du fond (8) d'une cuve sous pression d'un réacteur nucléaire (2) noyée dans de l'eau (4), le fond (8) comprenant des tubulures de raccordement (10) faisant saillie à l'intérieur (20) de la cuve sous pression du réacteur (8), le dispositif (24) pouvant être placé sur l'une des tubulures de raccordement (10) et comprenant un dispositif d'aspiration (30) qui présente un tuyau d'aspiration (32) avec une ouverture d'aspiration (36) mobile par rapport au reste du dispositif (24) pour aspirer les corps étrangers (22) du fond (8) et/ou de la tubulure de raccordement (10), un filtre (38) pour collecter les corps étrangers (22), une sortie (42) et une pompe d'aspiration (40) laquelle, lors du fonctionnement, refoule de l'eau (4) de l'ouverture d'aspiration (36) via le tuyau d'aspiration (32) et le filtre (38) vers la sortie (42), avec un capot de centrage (54) pouvant être placé sur la tubulure de raccordement (10), **caractérisé par** un support de base (58) pouvant tourner autour d'un axe de rotation (56) du dispositif (24) par rapport au capot de centrage (54) et présentant le dispositif d'aspiration (32).

2. Dispositif (24) selon la revendication 1, dans lequel, à l'état déposé, l'ouverture d'aspiration (36) est mobile par rapport à un axe longitudinal (52) du dispositif (24) s'étendant à travers la tubulure de raccordement (10) dans la direction périphérique, la direction radiale et la direction longitudinale.

3. Dispositif (24) selon la revendication 1 ou 2, dans lequel le tuyau d'aspiration (32) s'étend en-dehors du capot de centrage (54).

4. Dispositif (24) selon l'une des revendications précédentes, dans lequel le tuyau d'aspiration (32) est courbé dans une zone d'extrémité (35) en jonction avec l'ouverture d'aspiration (36).

5. Dispositif (24) selon l'une des revendications précédentes, dans lequel la zone d'extrémité (35) du tuyau d'aspiration (32) jouxtant l'ouverture d'aspiration (36) est interchangeable ensemble avec celle-ci.

6. Dispositif (24) selon l'une des revendications précédentes, dans lequel le filtre (38) contient un élément filtrant (80) qui peut être éjecté du dispositif (24) ensemble avec des corps étrangers (22) collectés dans l'élément filtrant (80).

7. Dispositif (24) selon la revendication 6, dans lequel l'élément filtrant (80) peut être éjecté à travers l'intérieur du capot de centrage (54).

8. Procédé pour éliminer des corps étrangers (22) du fond (8) d'une cuve sous pression d'un réacteur nucléaire (2) noyée dans de l'eau (4), le fond (8) comprenant des tubulures de raccordement (10) faisant saillie à l'intérieur (20) de la cuve sous pression du réacteur (8), dans lequel un dispositif (24) selon l'une des revendications 1 à 7 est placé sur l'une des tubulures de raccordement (10), la pompe d'aspiration (40) refoulant de l'eau (4) de l'ouverture d'aspiration (36) à travers le tuyau d'aspiration (32) via le filtre (38) vers la sortie (42), l'ouverture d'aspiration (36) étant déplacée par rapport au reste du dispositif (24) pour aspirer les corps étrangers (22) du fond (8) et/ou de la tubulure de raccordement (10), et les corps étrangers (22) étant collectés dans le filtre (38).

9. Procédé selon la revendication 8, dans lequel on aspire le fond (8) et/ou les tubulures de raccordement (10) dans une zone (106a, b) environnante de la tubulure de raccordement (10) occupée par le dispositif (24), laquelle zone va au moins jusqu'au milieu des tubulures de raccordement (10) voisines.
